# EUROPEAN PATENT APPLICATION

(11) **EP 1 345 166 A1**
(43) Date of publication of application: **17.09.2003**
(21) Application number: 02405203.7
(22) Date of filing: 15.03.2002
(51) Int. Cl.: G06K 19/10, B42D 15/10

(54) **Security element for data carrier**

(71) Applicant: KBA-GIORI S.A., 1003 Lausanne (CH)
(72) Inventor: Giori, Fausto, 1003 Lausanne (CH); Beaumont, Olivier, 1012 Lausanne (CH); Moreau, Vincent, 1003 Lausanne (CH)
(74) Representative: Kiliaridis, Constantin

(57) **Abstract**

The invention relates to a security element for a data carrier, such as banknotes, securities, checks, credit cards, ID cards and similar documents. A substrate comprises a first layer of material and at least a first opaque layer (3) of material covering partially or totally the first layer of material. The first layer has at least two adjacent zones (1,2) of a different color. The element further comprises a pattern (4) formed by a partial engraving of said opaque layer (3). The pattern (4,) extends at least partially on each of said zones (1,2) so that the pattern (4,) comprises adjacent parts of different color in perfect register apparent through said opaque layer (3).

## Description

The present invention concerns a security element for a data carrier, such as banknotes, securities, checks, credit cards and ID cards and similar documents.

The present invention also concerns a data carrier comprising such a security element and a process for producing a data carrier comprising a security element according to the invention.

In the field of banknotes and securities, there has been increasing needs for security features protecting against counterfeiting. Indeed, in the past years, computers, scanners and copy machines have been extensively developed and today, it is possible to buy very high-performance devices at a reasonable price. Since these devices are more efficient, it has been at the same time necessary to develop new and improved security features for securities, such as banknotes, checks, cards (i.e. credit cards), ID cards, passports etc. which would not allow them to be copied by standard computers or scanners, or even modern color copy machines.

Such security features include special inks, so called optically variable inks (OVI) or other inks with iridescent properties, used to print specific patterns on the substrate of the note, optically variable devices (OVD) in the shape of metallized patches or holograms, or also specific patterns, such as moiré patterns and other similar patterns, all of which are very difficult if not impossible to copy with actual devices, but, on the other hand, are easy to control visually.

Other security means include combinations of superimposed lines and/or patterns with colors, which are only visible under specific conditions, for example UV light or by transparency. Again, the interest of such security features is that they may easily be printed or placed on the document to be protected and also be controlled by simple devices, even visually, but they are impossible to reproduce with actual printers, scanners or copy machines.

Another specific technique involves watermarks in which the paper substrate is marked with lines or patterns only visible in transparency. A further development of this technique concerns pseudo-watermarks consisting in the creation of a window in the substrate, especially in paper-based substrates which are normally not transparent, said window being transparent.

US patent 6,082,778, the content of which is incorporated herein by reference, discloses an ID card protected from unauthorized reproduction with a copying machine. In this patent, the basic idea of the invention is to create a security element by combining the copy protection effect from a thin metal layer with the physical, in particular optical, properties of a further layer whose interplay prevents the identity card from being reproduced. Under a transparent card cover layer, there is a metal layer over a layer having special optical properties. In a first embodiment, the metal layer is locally demetalized thereby exposing the layer with special optical properties, i.e. making it visible in the demetalized area. The difference of contrast between the layers makes the marks easy to recognize by the eye. In a particular favorable embodiment, the layer having special optical properties is dark-colored, in particular black. Indeed, the combination of the direct reflection of the metalized area and a strong absorbent layer (black layer for example) prevents the detector of a copier from detecting a difference in contrast so that the marked information totally disappears.

In another embodiment disclosed in this patent, the layer having special optical properties contains fluorescent or phosphorescent substances which, when irradiated by the light of the copier are not induced to emit light of a wavelength in the optically visible spectral range. Thus, the marked area is not reproduced by the copier.

Further, in the field of offset printing groups, several colors are combined to produce printed color images. These colors usually are cyan, magenta, yellow and black and appropriate combination of these colors allows any color to be printed. In standard offset printing groups, each of said color is printed in an independent manner, i.e. different successive printing groups (one for each color), so that it is very difficult to obtain a proper register between the colors, either on each side of the printed matter, or even in a recto-verso register.

The aim of the invention is to create a new security element for data carriers.

In particular, an aim of the invention is to provide a security element, which is very difficult to copy or counterfeit with standard modern scanners, copy machines and other equivalent devices and also to print with current printing machines.

Another aim of the invention is to provide a security element, which is easy to produce with the actual machines used for fabricating data carriers comprising security elements.

Another aim of the invention is to provide data carriers, such as banknotes, securities, checks, credit cards, ID cards and similar documents with an improved security element, said data carrier being very difficult, if not impossible, to copy and to reproduce with modern copying devices, for example scanners, copy machines and equivalent devices and also with current printing machines.

A further aim of the invention is to provide a process for forming a security element according to the invention.

One aspect of security printing is the variability of the information on the security document. Example: the serial number on the banknote. However, individual serial numbers do not offer an intrinsic security against copy or reproduction. On the contrary, the process for forming a security element according to the present invention aims to offer both aspects of security: the aspect of the variability and the aspect of the intrinsic impossibility to copy and reproduce.

These aims are fulfilled by the new and inventive features as defined in claims 1 to 18.

A security element according to the invention has demonstrated to be very efficient, impossible to copy and very difficult to counterfeit with standard printing machines since a good register between the colors is impossible to obtain. The effect is similar to the so-called orloff technique which is obtained with a machine as disclosed in US patent 5,036,763 (simultaneous multicolor recto-verso printing), the content of which is incorporated by reference to the present application.

Further, the security element according to the invention uses a principle contrary to the one taught by US patent 6,082,778 cited above. In this patent, the idea is to take benefit of the high contrast between the non-removed layer (metalized layer) and the layer underneath, made of a dark-colored surface, e.g. black, which is exposed by removal of the metalized layer.

In the present invention, in addition, it is important to see both layers, especially zones of different colors and thus be able to control directly the register of pattern . Since the shape of the pattern may be very thin, it becomes impossible to preserve a perfect register of colors when copying the security element with a scanner, a copy machine, or when printing with standard printing machines, therefore a perfect register is only possible with original security elements.

Additional security can be provided by correlating the variable information of the security element of the invention with another variable information on the carrier, for example, the serial number. This correlated information of the security element can be crypted and coded by known techniques.

Further characterizing features and advantages of the present invention will become apparent from the following detailed description, given by way of non-limitative examples, and illustrated by the accompanying drawings, in which

Figures 1A to 1D show a first embodiment of the security element according to the invention.

Figure 2 shows a second embodiment of the security element according to the invention.

Figure 3 shows a third embodiment of the security element according to the invention.

Figure 4 shows a first type of data carrier comprising a security element according to the invention.

Figure 5 shows another type of data carrier comprising a security element according to the invention.

Figure 6 shows a bloc diagram of a process according to the invention.

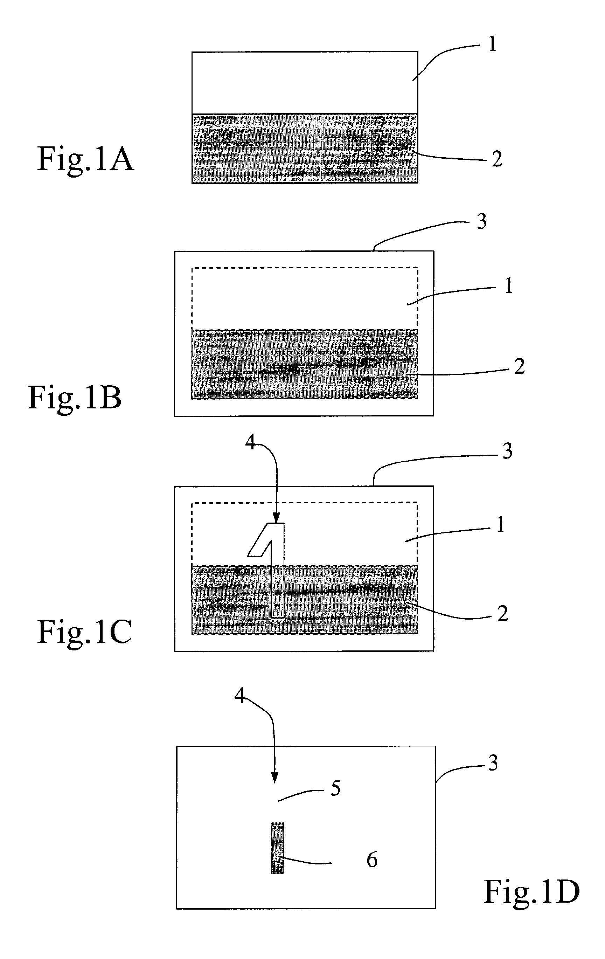

The first embodiment of the security element according to the present invention is described with reference to figures 1A to 1C.

In figure 1A, two zones 1, 2 of a first layer are shown, both zones 1, 2 having a different color, which is schematically represented by a bright zone 1 and a dark zone 2. Said zones are represented both with a rectangular shape, however, other equivalent shapes are possible, such as circular shapes, or combination of any kind of shapes (rectangular and circular, for example). This layer forms a background that may be printed on a substrate, for example by offset printing, a known technical printing process. Other printing techniques are of course possible.

In figure 1B, both zones 1 and 2 forming the first layer are represented with broken lines, and said first layer is covered by an opaque layer 3. For the sake of clarity, opaque layer 3 is shown transparent, however is it clear that this layer 3 is in fact opaque. This opaque layer 3 is made of an ink comprising metallic particles, for example an optically variable ink (so-called "OVI") known in the art or by an optically variable device (so-called "OVD"). Preferably, but not limited thereto, the ink is deposited by using a silk screen printing technique. Similar iridescent type of inks may also be deposited with flexographic or gravure printing processes.

In figure 1C, a pattern 4 has been formed in the security element of figure 1B, by engraving the opaque layer 3 along a given path to make the first layer (Zones 1 and 2) visible. The pattern is the number "1" but this representation is not limiting and any pattern is possible, i.e. alphanumeric characters and/or geometric shapes. For the sake of clarity, both zones 1 and 2 are still represented as if the layer 3 was transparent, but the effective result is represented in figure 1D, in which the second layer 3 is represented as being opaque. Thus, the pattern 4 comprises two parts 5 and 6 of different color, that is the color of the respective zone 1 or 2 forming the background.

Since both parts 5 and 6 are not printed separately but are the result of the engraving of a part of an opaque layer, the register is perfect and could never be obtained if both parts 5, 6 were printed separately.

In order to engrave the opaque layer 3, one uses a laser apparatus, for example a yag (yttrium-aluminum-garnet) laser as known in the art. This laser engraves the layer 3 containing material reacting with the laser depending upon the absorption coefficient of said material, and the beam does not react with the zones 1, 2 of the first layer that form the background. The laser beam must be monitored, either directly by moving the laser, along a preset path, or indirectly through mirrors to follow a predetermined path in order to form the requested pattern. Such pattern may form invariable information, identical for each security element, or variable information (for example a sequence of numbers and/or letters), which changes for each security element created. The engraving is made by burning or sublimation or other similar process induced by the laser radiation. The engraving can be variable from one data carrier to another. The engraving can be correlated to another variable information on the carrier, and also crypted and coded by known means.

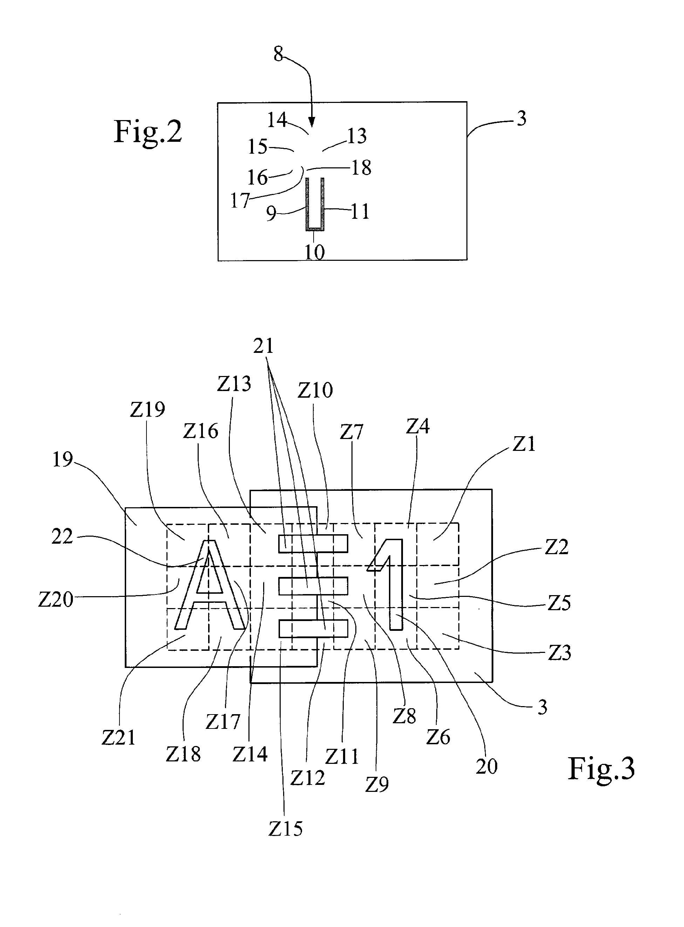

In a second embodiment, represented in figure 2, the pattern 8 (number "1") may be formed by engraving the opaque layer 3 along a thin line that follows the periphery of the desired pattern. In this case, the pattern 8 is formed of several segments, segments 9, 10 11 having zone 2 (see figure 1B) as background, hence the color of zone 2, and segments 13 to 18 having zone 1 as background, hence the color of said zone 1. This embodiment is particularly advantageous in that the thin lines are difficult to copy as such, and it becomes even more difficult to obtain a perfect register between the segments and the colors, because of their small size.

A third embodiment, as represented in figure 3, comprises a first layer with twenty one zones (Z1 to Z21) of at least two different colors, the first opaque layer 3 similar to the layer described in the other embodiments, and a second opaque layer 19, covering at least partially the first opaque layer 3 and the zones of the first layer. For example, said second opaque layer 19 may be made of a further security element, such as an optically variable device made of any material reacting with the laser beam as mentioned previously (so called OVD), which is common in the art, in the form of a patch . This patch comprises a metalized surface that reflects light and is nearly impossible to copy with copy machines, or to reproduce with scanners. Since this second opaque layer 19 is made of a different material than the first opaque layer 3, it may reacts in a different manner when exposed to the laser beam. For example, the same laser beam may produce pattern of different width in the first opaque layer 3 and in the second opaque layer 19. It is thus possible to vary the width of parts of the pattern with the same laser beam, which makes the security element even more difficult to copy. It has not only different colors in perfect register, but at the same time portions of different widths also in perfect register. However, both opaque layers may also be of the same material but in different colors. In the embodiment of figure 3, a first pattern 20 (number "1") is engraved in the first opaque layer 3 and extends over the zones Z4, Z5, Z6, Z7 and Z8. A second pattern 21 formed of three parallel and horizontal lines is engraved both on layer 3 and layer 19 extending, respectively, over zones Z7, Z10 and Z13; Z8, Z11 and Z14; Z9, Z12 and Z15. A third pattern 22 (letter "A") is also engraved in layer 19 over zones Z16, Z17, Z18, Z19, Z20 and Z21.

This embodiment is particularly advantageous in that it combines several zones of different colors, two opaque layers that may be of two different materials and patterns engraved in each opaque layer and in a part in which the opaque layers overlap each other.

Of course, depending on the material chosen to form the layers the width of the pattern may increase or decrease, figure 3 being only given as a non-limiting example.

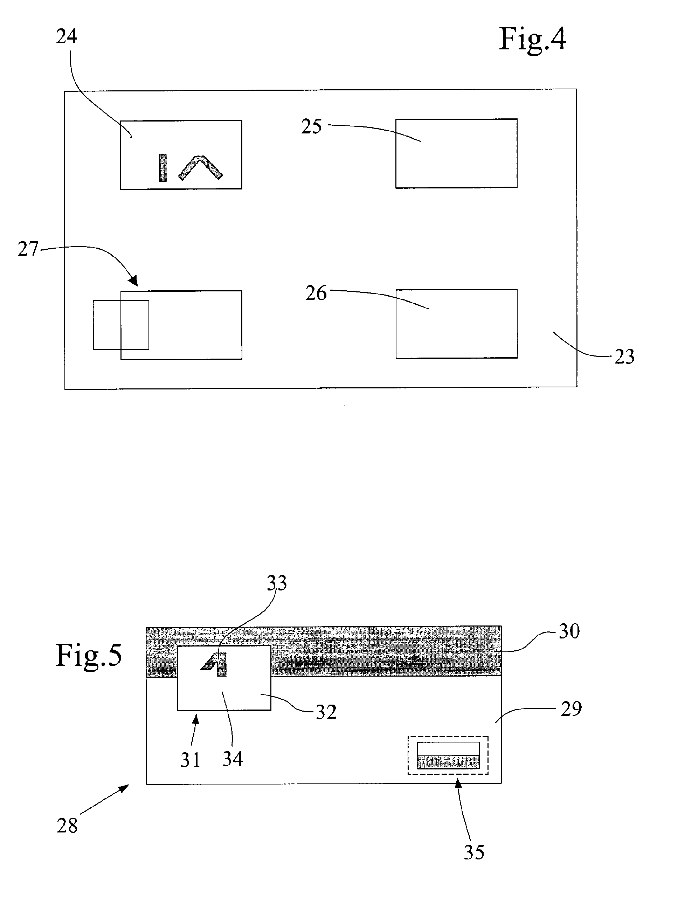

In figure 4, the data carrier is represented as a note 23, such as a banknote or a check. The note 23 is made, as known in the art, of a substrate, such as a paper substrate or a polymer substrate, or a plastic substrate on which a security element 24 according to the invention is printed. This note 23 comprises a security element as disclosed in one of the embodiment of figures 1D, 2, or 3 . The security element 24 comprises a number "1" and a letter "X". Therefore, the security element according to the invention could be used for numbering successive notes, when each note receives a different number. This is particularly useful for printing variable information, such as serial numbers: since the device used to engrave the second layer 3, for example a laser beam, may be guided to form any pattern, it is very easy to use it for numbering successive notes in addition of classical devices that print numbers. The laser beam can engrave correlated information to another variable information such as the serial number, and this engraved information can be crypted and coded by known means

For the sake of representation, the security element 24 corresponds to the embodiment of figure 1D; however, the other embodiments of figures 2 and 3 are possible, either alone, or in any combination on the same note. This combination is shown schematically in figure 4, in which, as said, element 24 could correspond to the embodiment of figure 1D, elements 25 and 26 could correspond to the embodiment of figure 2, and element 27 could correspond to the embodiment of figure 3, for example. Any combination would further improve the features of the note in that it would be even more difficult to copy of counterfeit since it carries different embodiments of a security element. It is also possible to combine the security elements on both sides of the substrate, using one element on one side and another (identical or different) on the other side.

In a further embodiment, disclosed in figure 5, the background with at least two zones of a different color may not be printed on the substrate but could be formed by the substrate itself. This is particularly useful for substrate made of plastic or similar products (as used for example for ID cards, credit cards and EC cards), which may easily be produced with a multicolored substrate. Of course, this principle may be applied to all substrate.

In the example shown in figure 5, a substrate 28 comprises two parts 29 and 30 of a different color, as schematically represented by a bright part 29 and a dark part 30. The parts 29, 30 are equivalent to the zones 1 and 2 of figure 1.

A security element 31 is present on the substrate 28, said element 31 comprising, as described here above, an opaque layer 32, for example a layer of optically variable ink, in which a pattern has been created by removing the layer 32 along a given path. As an example, the pattern has the shape of the number "1" with two colors, the upper part 33 of the color of part 30 and the lower part 34 of the color of part 29.

The principles described above for the embodiments of figures 2 or 3 on the substrate of figure 4 may be used for this substrate. It is also possible to further combine in this embodiment the security element 31 using the different colors of the substrate itself as background with another security element in which the background of two or more colors is printed on the substrate, i.e. to apply a security element similar to the elements 24, or 25, or 26 or 27 shown in figure 4 on the substrate 28 of the embodiment of figure 5. This variant is schematized by the element 35 in figure 5 corresponding schematically to the element of figure 1B, in which no specific pattern has been marked yet. Of course, any combination is possible, not only on the same side of the substrate, but also on both sides of the substrate.

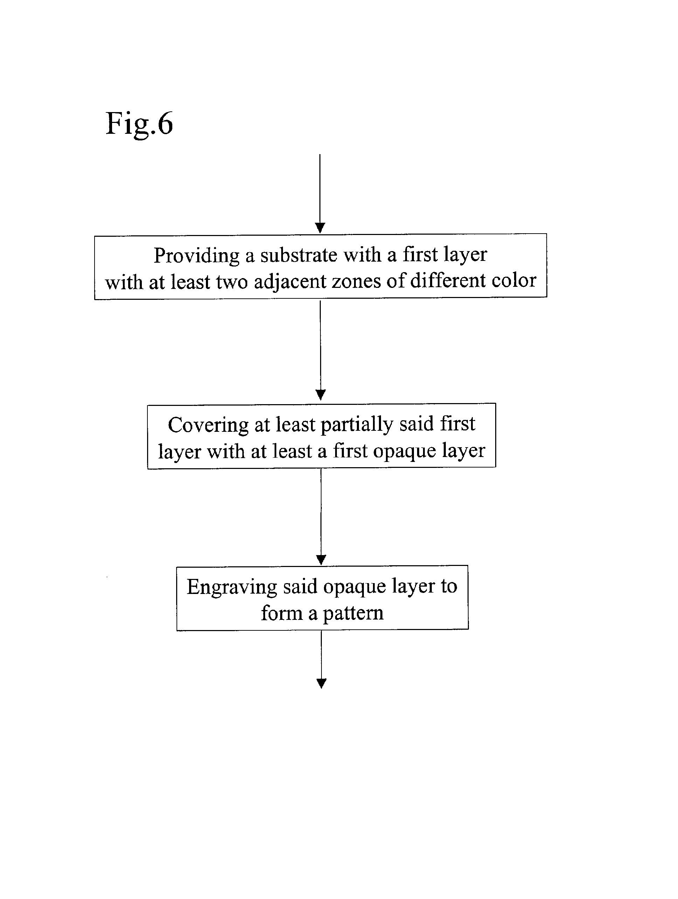

A process suitable for producing a security element according to the invention is shown schematically in the block diagram of figure 6.

The first step comprises the provision of a substrate with a first layer having at least two adjacent zones of different color. As disclosed above, said two zones may be printed on the substrate or they may be formed by the substrate itself, or they may be partially printed on the substrate and partially formed by the substrate.
The second step comprises covering at least partially said adjacent zones with a first layer that is opaque.

In the third step, said opaque layer is engraved, preferably via a yag-laser beam, to form a pattern, for example a number, a sequence of numbers, a letter, a sequence of letters or a combination of both to make the first layer apparent. As described above, it is possible to engrave the opaque layer corresponding to the exact pattern to be formed (see figure 1D), or, in another variant, to draw the pattern by engraving thin lines corresponding to the periphery of the pattern to be formed (see figure 2).

The embodiments described above are given by way of examples and are not limiting.

As a further development of the invention, it is possible to use three or more colors for the background, resulting in patterns having parts of three different colors or more, according to the principle of the invention.

## Claims

1. Security element for a data carrier, such as banknotes, securities, checks, credit cards, ID cards and similar documents, with a substrate (23,28) comprising a first layer of material and at least a first opaque layer (3) of material covering partially or totally said first layer of material
**characterized in that**
said first layer has at least two adjacent zones (1,2) of a different color,
**in that** the element further comprises a pattern (4,8) formed by a partial engraving of said opaque layer (3), wherein said pattern (4,8) extends at least partially on each of said zones (1,2) so that said pattern (4,8) comprises adjacent parts of different color in register apparent through said opaque layer (3).

2. Security element as claimed in claim 1, **characterized in that** said first layer is printed on said substrate (23).

3. Security element as claimed in claim 1, **characterized in that** said first layer is formed by said substrate (28).

4. Security element as claimed in claim 1, **characterized in that** said first layer is partially formed by said substrate (28) and partially printed on said substrate (28).

5. Security element as claimed in one of the preceding claims, **characterized in that** it comprises a second opaque layer (19) covering at least partially said first layer and said first opaque layer (3), said pattern being formed by a partial engraving of said first and second opaque layers.

6. Security element as claimed in one of the preceding claims, **characterized in that** said opaque layer (3) or layers (3,19) are made of an optically variable ink, or of an optically variable device or of a combination of both.

7. Security element as claimed in one of the preceding claims, **characterized in that** said pattern (4,8) is formed by engraving said opaque layer (3) or layers (3,19) along a shape corresponding to said pattern.

8. Security element as claimed in one of the preceding claims, **characterized in that** said predetermined pattern (4,8) forms variable information which varies from one data carrier to another.

9. Security element as claimed in claim 8, **characterized in that** said pattern is correlated with another variable information on the data carrier.

10. Security element as claimed in claim 9, **characterized in that** said correlated pattern is crypted and coded.

11. Security element as claimed in one of the preceding claims, **characterized in that** said pattern is formed of alphanumeric characters and/or geometric forms.

12. A data carrier (23,28), such as banknotes, securities, checks, credit cards or ID cards comprising a security element as claimed in one of the preceding claims.

13. A process for forming a data carrier as claimed in claim 11 with a security element, said process being **characterized by** the following steps:
- ) providing a substrate with a first layer of material having at least two adjacent zones of a different color and a first opaque layer of material covering at least partially said first layer of material
- ) engraving said first opaque layer to form a pattern, whereby said pattern extends at least partially on each of said zones so that said pattern comprises adjacent parts of different color in register apparent through said opaque layer.

14. A process as claimed in claim 13, **characterized in that** said first layer is printed on said substrate.

15. A process as claimed in claim 13 or 14, **characterized in that** said first layer is formed by said substrate.

16. A process as claimed in one of claims 13 to 15, **characterized in that** said substrate is provided with a second opaque layer covering at least partially said first layer and said first opaque layer, said pattern being formed by engraving said first and second opaque layers

17. A process as claimed in one of claims 13 to 16, **characterized in that** said opaque layers are made of an optically variable ink, or of an optically variable device, or a combination of both.

18. A process as claimed in one of claims 13 to 17, **characterized in that** said pattern is formed by engraving said opaque layer or layers along a shape corresponding to said pattern.

19. A process as claimed in one of claims 13 to 18, **characterized in that** said engraving of said opaque layers is made by a laser.
